# EUROPÄISCHE PATENTSCHRIFT

(11) **EP 2 428 402 B1**
(45) Veröffentlichungstag und Bekanntmachung des Hinweises auf die Patenterteilung: **04.12.2013**
(21) Anmeldenummer: 11007199.0
(22) Anmeldetag: 06.09.2011
(51) Int. Cl.: B60R 9/06

(54) **Lastenträger-Kupplung und Lastenträger**
Load carrier coupling and load carrier
Couplage pour support de charge et support de charge

(30) Priorität: 14.09.2010 DE 102010045357
(43) Veröffentlichungstag der Anmeldung: 14.03.2012
(73) Patentinhaber: WESTFALIA - Automotive GmbH, 33378 Rheda-Wiedenbrück (DE)
(72) Erfinder: Recker, Andreas, 33602 Bielefeld (DE)
(74) Vertreter: Bregenzer, Michael

(56) Entgegenhaltungen:
- EP-A2- 1 170 178
- DE-A1- 10 155 232
- DE-A1-102006 013 465
- DE-A1-102008 047 110
- DE-U1- 9 303 510

## Beschreibung

Die Erfindung betrifft eine Lastenträger-Kupplung für einen Lastenträger, zum lösbaren Befestigen an einem Kupplungskörper, insbesondere einer Kupplungskugel, einer Anhängekupplung eines Kraftfahrzeugs, mit einer Klemmeinrichtung, die Klemmteile umfasst, von denen mindestens eines ein Stell-Klemmteil bildet, das anhand eines Betätigungskörpers zwischen einer zum Einbringen des Kupplungskörpers zwischen die Klemmteile vorgesehenen Offenstellung und einer den Kupplungskörper klemmenden Klemmstellung bewegbar ist, mit einem Spannhebel zum Spannen des Stell-Klemmteils in die Klemmstellung, und mit mindestens einem Riegel, der in einer Verriegelungsstellung ein Verstellen der Klemmeinrichtung in die offenstellung blockiert und in einer Lösestellung ein Verstellen der Klemmeinrichtung in die Offenstellung freigibt, wobei der mindestens eine Riegel an einem auf den Betätigungskörper wirkenden, zum Verstellen des Spannhebels zwischen der Klemmstellung und der offenstellung der Klemmeinrichtung vorgesehenen. Handgriffteil des Spannhebels angeordnet ist.

Eine derartige Lastenträger-Kupplung bzw. ein damit ausgestatteter Lastenträger gehen beispielsweise aus DE 10 2008 047 110 A1 hervor. Zur Betätigung der Lastenträger-Kupplung dient ein Spannhebel, an dem eine Riegelklinke beweglich gelagert ist. Mit dem Spannhebel kann ein Klemmteil gegen einen ein anderes Klemmteil bildenden oder aufnehmenden Spann-Käfig oder ein Spanngehäuse verstellt werden, so dass der Kupplungskörper, z.B. eine Kupplungskugel einer üblichen Ku-gelkupplung für Kraftfahrzeuge, in dem Spann-Käfig bzw. Klemm-Käfig geklemmt ist.

Es ist vorteilhaft, am eigentlichen Spannhebel zusätzlich noch ein Sicherungselement, beispielsweise eine Sperrklinke oder einen Riegel, z.B. verschieblich, verschwenkbar oder dergleichen, zu lagern. Wenn also die Lastenträger-Kupplung entriegelt werden soll, muss der Riegel zunächst entriegelt werden, beispielsweise durch Daumendruck, Umgreifen oder dergleichen, bevor die eigentliche Lösebewegung, d.h. das. Entspannen der Lastenträger-Kupplung vorgenommen werden kann. Die Handhabung ist dadurch unbequem, die Gefahr von Fehlbedienungen droht.

Es ist daher die Aufgabe der vorliegenden Erfindung, eine bequem handhabbare Lastenträger-Kupplung bereitzustellen.

Zur Lösung der Aufgabe ist bei einer Lastenträger-Kupplung der eingangs genannten Art vorgesehen, dass das Handgriffteil an dem Betätigungskörper mittels einer Lageranordnung beweglich gelagert ist, so dass der Riegel durch eine Verstellung des Handgriffteils relativ zu dem Betätigungskörper zwischen der Verriegelungsstellung und der Lösestellung verstellbar ist, wobei die Lageranordnung das Handgriffteil und den Betätigungskörper bewegungsfest bezüglich einer Spannbewegung koppelt, in der das Handgriffteil, auf den Betätigungskörper beim Spannen der Klemmeinrichtung wirkt.

Ein Grundgedanke der Erfindung ist es, dass der Bediener nur eine einzige Bedienkomponente hat, nämlich das Handgriffteil, das beispielsweise einen mit einer Hand zu umgreifenden Handgriff umfasst. Der Bediener umgreift also das Handgriffteil und verlagert dieses relativ zum Betätigungskörper, beispielsweise durch eine Schiebebewegung, Drehbewegung oder

Schwenk-Schiebebewegung, abhängig von der Ausgestaltung der Lageranordnung zwischen Handgriffteil und Betätigungskörper, um den mindestens einen Riegel in seine Lösestellung zu verstellen. Sodann ist es möglich, die Lastenträger-Kupplung insgesamt zu lösen, d.h. die Klemmeinrichtung von der Klemmstellung in die offenstellung zu verstellen. Z.B. kann Handgriffteil um seine Längsachse gedreht werden, um zu ent- oder verriegeln.

Der Bediener muss nicht beispielsweise eine Sperrklinke betätigen, z.B. durch Verschieben oder Verschwenken, sondern muss den Handgriff bzw. das Handgriffteil nur noch als Ganzes ergreifen, um zunächst die Entriegelung der verriegelungseinrichtung mit dem mindestens einen Riegel zu bewirken, anschließend die Klemmeinrichtung zu "entspannen", d.h. zu lösen.

Der Riegel ist an dem Handgriffteil zweckmäßigerweise ortsfest angeordnet. Es ist aber auch möglich, dass der Riegel oder die Riegel an dem Handgriffteil beweglich gelagert sind, beispielsweise federbelastet in die Verriegelungsstellung sind, wobei die Feder einen Nachstelleffekt des Riegels in seine Verriegelungsstellung bewirken kann. Weiterhin ist es denkbar, dass der mindestens eine Riegel flexibel bezüglich des Handgriffteils ist, beispielsweise durch ein Hartgummibauteil gebildet ist oder ein solches aufweist.

Die Spannbewegung ist zweckmäßigerweise eine Schwenkbewegung. Aber auch ein Schwenken mit beispielsweise überlagertem Schieben ist ohne Weiteres denkbar.

Die Lageranordnung umfasst zweckmäßigerweise ein Schiebelager oder bildet ein solches. Das Schiebelager ist zweckmäßigerweise ein Linearschiebelager. Bevorzugt ist eine Ausführungsform, bei der das Schiebelager eine ausschließliche Schiebebeweglichkeit zulässt, wobei selbstverständlich auch eine Schiebe-Schwenkbewegung des Handgriffteils bezüglich des Betätigungskörpers ohne Weiteres möglich ist.

Das Schiebelager umfasst zweckmäßigerweise ein Paar an einander gegenüberliegenden Seitenflächen des Handgriffteils oder des Betätigungskörpers angeordnete Führungsaufnahmen, beispielsweise Führungsnuten oder Langlöcher, sowie Führungsvorsprünge. Die Führungsaufnahmen dienen zur Aufnahme von Führungsvorsprüngen am anderen Bauteil, z.B. dem Betätigungskörper oder dem Handgriffteil. Sind am Handgriffteil oder Betätigungskörper jedoch Führungsvorsprünge vorgesehen, greifen diese in Führungsaufnahmen am anderen Bauteil ein. Es versteht sich, dass beliebige Paarungen von Führungsvorsprüngen und Führungsaufnahmen möglich sind. Durch die Anordnung von Führungsaufnahmen und Führungsvorsprüngen an einander entgegengesetzten bzw. gegenüberliegenden Seiten des zugeordneten anderen Bauteils ist eine optimale Führung des Lagers bzw. der Lageranordnung zwischen Handgriffteil und Betätigungskörper möglich.

Es ist vorteilhaft, wenn mindestens zwei Schiebelager gemäß einer bevorzugten Ausführungsform bezüglich einer Längserstreckungsrichtung der Lageranordnung, des Handgriff teils oder eines zum Koppeln mit dem Handgriffteil vorgesehenen Koppelabschnitts des Betätigungskörpers nebeneinander angeordnet sind. Dadurch können Spannkräfte, d.h. in Richtung der Spannbewegung wirkende oder entlang einer Spannbewegungsbahn zum Spannen oder Losen der Klemmeinrichtung wirkende Kräfte, optimal vom Handgriffteil auf den Betätigungskörper übertragen werden.

Der Spannhebel umfasst mindestens ein Indexteil zur Anzeige der Klemmstellung und/oder der Verriegelungsstellung gemäß einer bevorzugten Ausführungsform. Somit bleibt der Bediener nicht im Unklaren darüber, ob die Klemmstellung bzw. die Verriegelungsstellung erreicht ist oder nicht. Bei dem Indexteil kann es sich beispielsweise um einen Zeiger oder ein Indexelement handeln, dass auf eine Farbmarkierung, eine Skala oder dergleichen, zeigt.

Bevorzugt ist der Betätigungskörper mittels eines Schwenklagers schwenkbeweglich relativ zu einem der Klemmteile gelagert, gegenüber dem das mindestens eine Stell-Klemmteil spannbar ist. Das "feststehende" Klemmteil ist beispielsweise mit einem Querträger des Lastenträgers fest verbunden. Es versteht sich, dass der Betätigungskörper auch für eine lineare Verstellung, eine kombinierte Schwenk-/Schiebebewegung oder dergleichen des Stell-Klemmteils relativ zum anderen Klemmteil oder zu den anderen Klemmteilen, ausgestaltet sein kann.

Bevorzugt umfasst das Handgriffteil einen Arm. Mithin hat das Handgriff teil, insgesamt zweckmäßigerweise auch der Spannhebel, eine armartige Gestalt.

Eine bevorzugte Ausführungsform sieht weiterhin vor, dass die Lastenträger-Kupplung ein Schloss aufweist, mit dem das Handgriffteil in der Verriegelungsstellung und/oder der Offenstellung verschließbar ist. Beispielsweise kann ein Schloss vorgesehen sein, das an dem Betätigungskörper oder dem Handgriffteil angeordnet ist und ein Verstellen des jeweiligen Bauteils verhindert bzw. blockiert. Bevorzugt ist das Schloss am Handgriffteil angeordnet und blockiert ein Verstellen desselben in Richtung der Entriegelungsstellung bzw. Lösestellung, wenn das Schloss verschlossen ist.

Der mindestens eine Riegel umfasst zweckmäßigerweise eine vor einen Griffabschnitt des Handgriffteils vorstehende Klaue oder einen dort vorstehenden Haken. Somit kann also der Riegel beispielsweise an ein ortsfest mit einem ortsfesten Bauteil der Lastenträger-Kupplung verhakt werden. Bei dem Riegel kann es sich selbstverständlich auch um einen Riegelvorsprung handeln, der in der Art eines Steckbolzens oder dergleichen, seine Riegelfunktion erfüllt, d.h. in eine Riegelaufnahme einsteckbar ist.

Bevorzugt ist vorgesehen, dass der Riegel durch eine Federanordnung in die Verriegelungsstellung belastet ist. Beispielsweise ist das Handgriffteil als Ganzes durch eine Feder, z.B. eine Zugfeder oder eine Druckfeder, in Richtung der Verriegelungsstellung belastet. Die Federanordnung ist beispielsweise zwischen dem Betätigungskörper und dem Handgriffteil angeordnet.

Der Spannhebel ist zweckmäßigerweise in der Klemmstellung der Klemmeinrichtung oberhalb eines mindestens eines der Klemmteile umfassenden, zur Aufnahme des Kupplungselement vorgesehenen Klemm-Gehäuse angeordnet oder übergreift dieses. Es ist aber auch möglich, dass der Spannhebel ein durch den Spannhebel nicht betätigbares, bezüglich eines Gestells des Lastenträgers, beispielsweise einem Querträger, ortsfestes Klemmteil übergreift. Dieses Klemmteil kann, wie erwähnt, beispielsweise Bestandteil eines Klemmteilgehäuses sein.

In der Verriegelungsstellung bildet der Spannhebel, insbesondere das Handgriffteil, zweckmäßigerweise ein Widerlager für das Stell-Klemmteil, so dass das Stell-Klemmteil gegen ein Verstellen aus der Klemmstellung gesichert ist.

Das Schwenklager, mit dem der Stellhebel an einem ortsfesten Bauteil der Lastenträger-Kupplung schwenkbar gelagert ist, und der mindestens eine Riegel sind zweckmäßigerweise an einander entgegengesetzten Seiten des ortsfesten Klemmteils oder des Klemm-Gehäuses angeordnet.

Mindestens eines der Bauteile des Spannhebels, beispielsweise das Handgriff teil oder der Betätigungskörper, bildet zweckmäßigerweise ein Gehäuse aus, z.B. ein Handgriff-Gehäuse, oder hat einen Gehäuseabschnitt, in dem ein Lagerabschnitt des jeweils anderen Bauteiles aufgenommen ist.

Das Stell-Klemmteil ist zweckmäßigerweise durch eine Federanordnung in die Offenstellung belastet. Dadurch wird die Klemmeinrichtung sozusagen offengehalten, so dass die Anbringung an dem Kupplungskörper leicht fällt.

Das Stell-Klemmteil ist zweckmäßigerweise beweglich, beispielsweise schwenkbeweglich und/oder schiebebeweglich, an dem Betätigungskörper gelagert. Es ist aber auch denkbar, dass das Stell-Klemmteil mit dem Betätigungskörper einstückig ist. Weiterhin ist es möglich, dass die beiden Bauteile lose miteinander verbunden sind, d.h. dass der Betätigungskörper sozusagen auf das Stell-Klemmteil drückt, wenn er dieses spannt.

Nachfolgend wird ein Ausführungsbeispiel der Erfindung anhand der Zeichnung erläutert. Es zeigen:
- Figur 1: eine perspektivische Schrägansicht von hinten eines erfindungsgemäßen Lastenträgers, von dem in
- Figur 2: in perspektivischer Schrägansicht eine Lastenträger-Kupplung in Schließstellung bzw. Klemmstellung gezeigt ist,
- Figur 3: eine perspektivische Schrägansicht der Lastenträger-Kupplung gemäß Figur 2, jedoch in teilweise geöffneter Stellung,
- Figur 4: die Lastenträger-Kupplung gemäß Figuren 2, 3 in verriegelter und entriegelter Stellung,
- Figur 5: eine teilweise Ansicht der Lastenträger-Kupplung gemäß Figur 4, wobei ein Handgriffteil zur Verdeutlichung innenliegender Komponenten entfernt ist,
- Figur 6a: eine teilweise Frontalansicht der Lastenträger-Kupplung gemäß der vorstehenden Figuren in Offenstellung,
- Figur 6b: eine teilweise geschnittene Darstellung, etwa entsprechend Figur 6a,
- Figur 7: eine Spannkomponente und
- Figur 8: eine Klemmkörperkomponente der Lastenträger-Kupplung gemäß der vorstehenden Figuren.

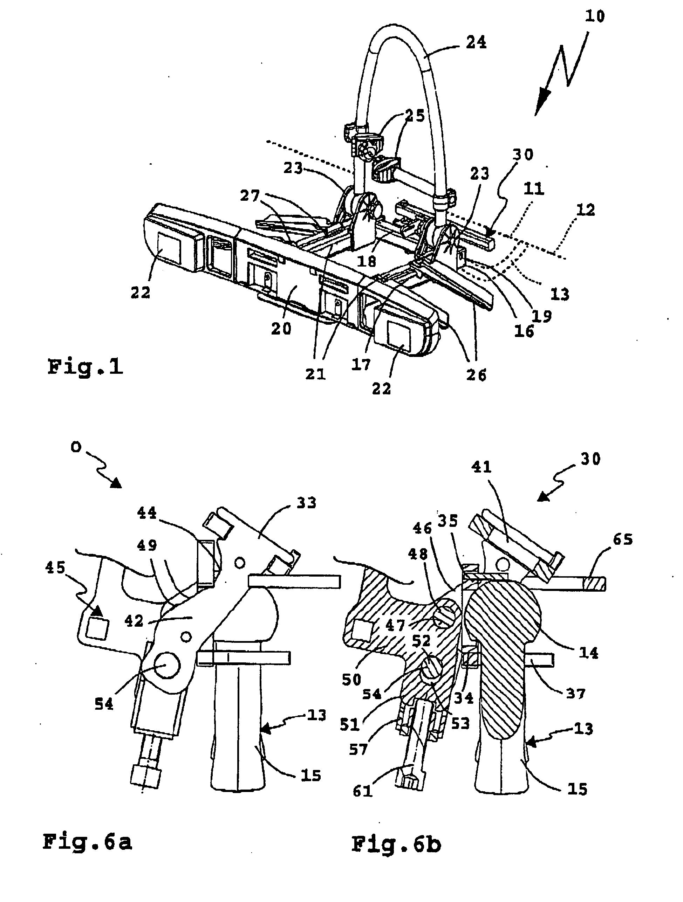

Ein in Figur 1 dargestellter Lastenträger 10 kann an einem Heck 11 eines Kraftfahrzeugs 12 befestigt werden, nämlich an einer Anhängekupplung 13, die einen Kupplungskörper 14, beispielsweise eine Kupplungskugel, aufweist. Der Lastenträger 10 kann insoweit auch als ein Heck-Lastenträger oder Heckträger bezeichnet werden. Der Lastenträger 10 umfasst einen Grundträger 16, an dem ein Lastenaufsatz 17 mit einer nicht sichtbaren Lageranordnung gelagert ist, beispielsweise schwenk- und/oder schiebebeweglich, um den Lastenaufsatz 17 vom Heck 11 wegzuschwenken, beispielsweise zum Be- und Entladen des Kraftfahrzeugs 12. Selbstverständlich wäre auch eine starre oder einteilige Bauform denkbar, bei der dieses Wegklappen oder Wegschwenken eines Lastenaufsatzes nicht möglich ist. Die Lastenträger-Kupplung 30 ist an einem Querträger 18 des Lastenträgers 10 angeordnet. Der Querträger 18 bildet einen Bestandteil des Grundträgers 16. Vom Querträger 18 stehen in Fahrzeuglängsrichtung des Kraftfahrzeuges 12 Längsträger 19 ab, so dass der Querträger 18 und die beiden Längsträger 19 insgesamt eine U-förmige Gestalt bilden. Der Querträger 18 ist der Grundschenkel, die beiden Längsträger 19 sind die Seitenschenkel des Grundträgers 16, der somit also vorteilhaft ein Gestell bildet.

Auch der Lastenaufsatz 17 ist gestellartig. Von seinem Querträger 20 stehen Längsträger 21 winkelig ab, so dass insgesamt auch eine U-förmige Anordnung gebildet ist. Die Längsträger 19, 21 liegen in einer in Figur 1 dargestellten Transportstellung, die zum Fahrbetrieb des Kraftfahrzeuges 12 vorgesehen ist, aufeinander auf. Der Querträger 20 dient beispielsweise zum Tragen eines Kennzeichens. Der Querträger 20 und der Querträger 18 sind an einander entgegengesetzten Seiten des Lastenträgers 10 vorgesehen, wobei der Querträger 18 näher beim Heck 11 ist, der Querträger 20 weiter entfernt.

Am Querträger 20 sind Leuchten 22 befestigt bzw. stehen seitlich vor diesen vor. Bevorzugt sind die Leuchten 22 beweglich am Querträger 20 gelagert, so dass sie beispielsweise in Richtung der Längsträger 19, 2.1 geschwenkt werden können, wenn der Lastenträger 10 nicht gebraucht wird.

Zum Stützen und Halten von auf dem Lastenaufsatz 17 befestigten Gegenständen dient ein hochstehendes Halteelement 24, z.B. ein Bügel. Das Halteelement 24 ist winkelig zu den Längsträgern 21. Es wird von Haltern 23, vorzugsweise Schwenkhaltern, gehalten, die an den dem Querträger 20 entgegengesetzten freien Längsenden der Längsträger 21 angeordnet sind. Am Halteelement 24 sind Klammerhalter 25 angeordnet, mit denen beispielsweise Fahrräder, die auf dem Lastenträger 10 befördert werden, geklammert und gehalten werden können. Diese Fahrräder können auf Trageelementen 26, beispielsweise Rinnen, aufgestellt werden. Die Trageelemente 26 sind mittels Schwenklagern 27 schwenkbar an den Längsträgern 21 gelagert, so dass sie von der in Figur 1 dargestellten Nutzstellung in eine Stau- oder Transportstellung verbringbar sind, in der sie zwischen den Längsträgern 21 angeordnet sind.

Nicht nur die Handhabbarkeit des Lastenträgers 10 als solcher, d.h. beispielsweise das verstellen zwischen einer Packstellung oder Transportstellung und einer Gebrauchsstellung, wie in Figur 1 dargestellt, fällt sehr leicht, sondern auch das Befestigen des Lastenträgers 10 am Kraftfahrzeug 12. Hierfür ist die Lastenträger-Kupplung 30 in folgender Weise komfortabel ausgestaltet.

Prinzipiell ist die Lastenträger-Kupplung 30 ähnlich aufgebaut, wie die in DE 10 2008 047 110 A1 beschriebene Lastenträger-Kupplung, so dass insofern auf gleiche oder gleichartige Komponenten im Prinzip Bezug genommen werden kann, d.h. die Offenbarung der früheren Anmeldung hiermit eingeschlossen wird. Dennoch werden die wesentlichen Komponenten nochmals erläutert, besonders die für die komfortable, sichere Bedienung verantwortlichen Innovationen, die bei der Lastenträger-Kupplung 30 realisiert sind.

Die Lastenträger-Kupplung 30 umfasst eine Klemmeinrichtung 31, die zum Klemmen des Kupplungskörpers 14, d.h. der Kupplungskugel, dient. Die Klemmeinrichtung 31 enthält ein bezüglich des Grundträgers 16 ortsfestes Widerlager-Klemmteil 32 sowie ein gegenüber dem Widerlager-Klemmteil 32 beweglich gelagertes, daher als Stell-Klemmteil 33 bezeichnetes zweites Klemmteil. Dies ist exemplarisch zu verstehen, da selbstverständlich auch mehrere Klemmteile, sowohl ortsfeste als auch verstellbare, bei einer erfindungsgemäß ausgestalteten Lastenträger-Kupplung vorgesehen sein könnten. Das Widerlager-Klemmteil 32 umfasst einen Klemmkörper 34, in dem eine Aufnahme 35 zur Aufnahme des Kupplungskörpers 14 vorgesehen ist, beispielsweise eine runde Bohrung, angepasst an die kugelige Außenkontur des Kupplungskörpers 14, oder dergleichen.

Vom Klemmkörper 34 steht ein Fixierkörper 36 winkelig ab, der zum Fixieren einer Stange 15 der Anhängekupplung 13 dient, auf der der Kupplungskörper 14 angeordnet ist. Somit wird also die Anhängekupplung 13 auch unterhalb des Kupplungskörpers 14 gehalten. Der Fixierkörper 36 hat nämlich eine Aufnahme 37, in die die Stange 15 eingreifen kann. Somit könnte man den Fixierkörper 36 auch als "Halsfixierung" für die Anhängekupplung 13 bezeichnen. Der Fixierkörper 36 steht vorliegend rechtwinkelig vom Klemmkörper 34 ab. Beide Körper 34, 36 sind plattenartig.

Oberhalb des Fixierkörpers 36, vorliegend parallel zu diesem, ist ein Stützkörper 38 angeordnet. Der stützkörper 38 steht ebenfalls vom Klemmkörper 34 ab, vorliegend rechtwinkelig.

Die Körper 34, 36 sowie 38 sind vorliegend jeweils individuelle, jedoch zusammengesetzte, beispielsweise verschweißte und/oder verklebte und/oder verschraubte Komponenten, die jedenfalls insgesamt ein Klemm-Gehäuse 39 bilden.

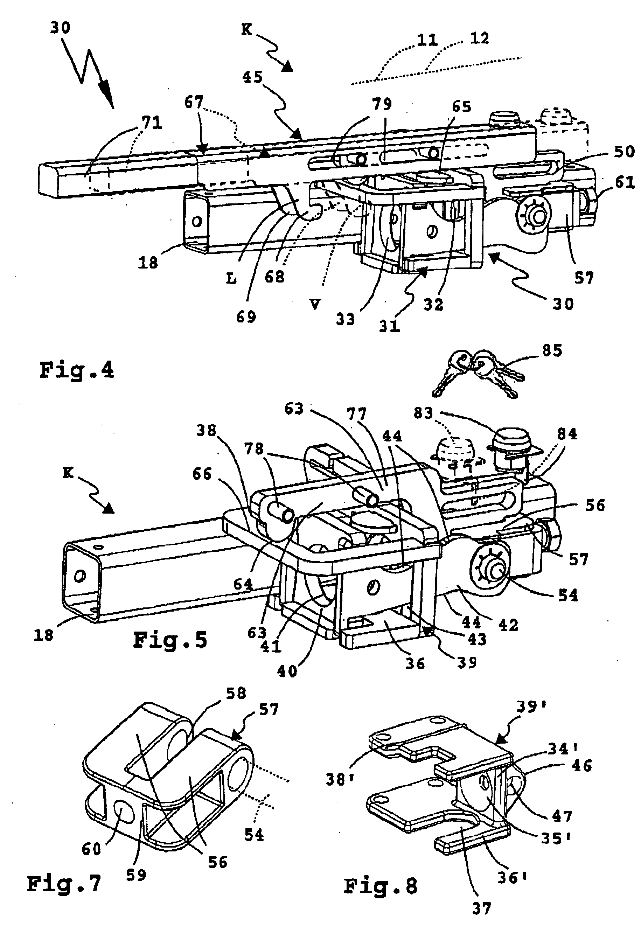

In Figur 8 ist eine alternative Ausführungsform für das Klemm-Gehäuse 39 gezeigt, also ein Klemm-Gehäuse 39`. Dies enthält ebenfalls Klemm-, Fixier- und Stützkörper, die als Klemmkörper 34', Fixierkörper 36' und Stützkörper 38' zur Verdeutlichung von Unterschieden bezeichnet sind. Die Aufnahme 35' des Klemmkörpers 34' ist beispielsweise als kugelige Ausnehmung oder Kugelkalotte ausgestaltet, erfüllt aber ansonsten dieselbe Aufnahme- bzw. Klemmfunktion wie die Aufnahme 35. Jedenfalls sind der Klemmkörper 34', der Fixierkörper 36' und der Stützkörper 38' einstückig.

Die Gehäusebauform des relativ zum Grundgestell des Lastenträgers 10 ortsfesten Widerlagers bzw. Widerlager-Klemmteils ist jedoch nicht notwendig, verbessert allerdings den Halt der Lastenträger-Kupplung 30 an der Anhängekupplung 13.

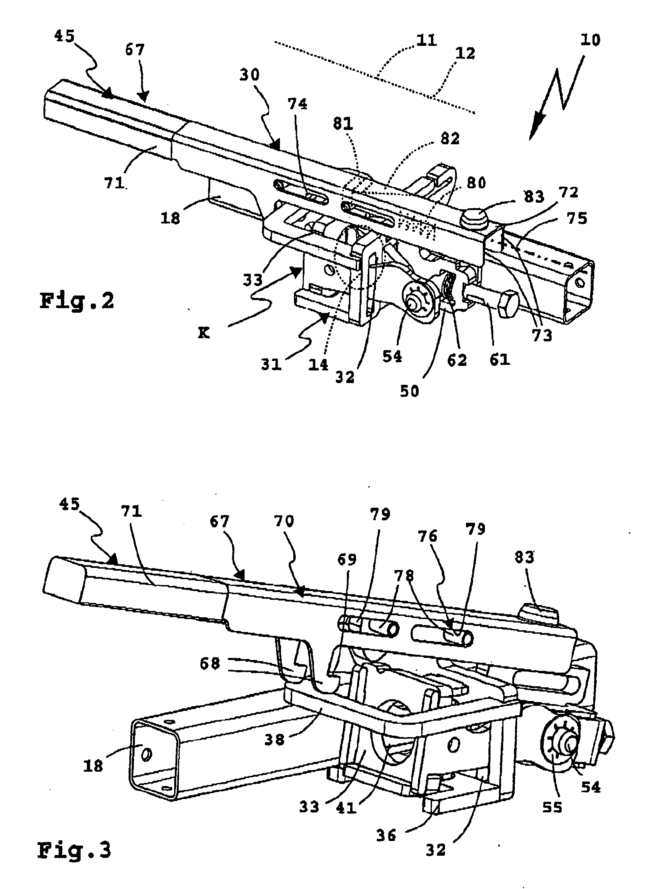

Das stell-Klemmteil 33 ist relativ zum Widerlager-Klemmteil 32 verstellbar, so dass es zwischen einer in Figuren 6a, 6b vollständig geöffneten, nachfolgend als offenstellung o bezeichneten Stellung und einer den Kupplungskörper 14 klemmenden Klemmstellung K verstellbar ist (Figuren 2, 4, 5), wobei zwischen diesen Stellungen 0 und K selbstverständlich auch Zwischenstellungen möglich sind, so z.B, die teilweise geöffnete bzw. klemm-entspannte Stellung gemäß Figur 3.

Das Stell-Klemmteil 33 umfasst einen Klemmkörper 40, der ähnlich wie der Klemmkörper 34 eine plattenartige Gestalt aufweist. Zudem hat auch der Klemmkörper 40 eine Aufnahme 41 für das zu klemmende Element, den Kupplungskörper 14, beispielsweise eine kreisförmige Ausnehmung oder eine Kalotte, ähnlich wie beim Klemmkörper 34' der Fall.

Vom Klemmkörper 40 stehen Seitenschenkel ab, die nachfolgend wegen ihrer Funktion als zugbelastbare bzw. zu spannende oder zu ziehende Bauteile als Zugarme 42 bezeichnete Seitenschenkel abstehen. Die Zugarme 42 und der Klemmkörper 40 bilden insgesamt eine U-förmige Konfiguration.

Die zugarme 42 stehen nach hinten, d.h. an einer vom Klemmkörper 40 abgewandten Seite, vor den Klemmkörper 34, somit auch das Klemm-Gehäuse 39 vor. Beispielsweise durchdringen die Zugarme 42 Ausnehmungen 43 (z.B. Schlitze) am Klemmkörper 34 oder sind, wie beim Klemm-Gehäuse 39' der Fall, seitlich am Klemmkörper 34' vorbeigeführt.

An den Zugarmen 42 sind oben und/oder unten, jedenfalls in einem Berührbereich mit dem Widerlager-Klemmteil 32, Kurvenflächen oder sonstige Führungsmittel vorhanden, die im Sinne eines Unterstützens der öffenbewegung in Richtung der Offenstellung 0 und/oder im Sinne einer Unterstützens der Schließbewegung bzw. Klemmbewegung in Richtung der Klemmstellung K wirksam sind. Beispielsweise gleiten die Kurvenflächen 44 an den Innenseiten der Ausnehmungen 43 entlang.

Die Klemmeinrichtung 31 ist mittels eines Spannhebels 45 zwischen der Klemmstellung K und der Offenstellung 0 verstellbar. Der Spannhebel 45 ist bezüglich des Widerlager-Klemmteiles 32 beweglich gelagert, beispielsweise schwenkbar. An dem Klemm-Gehäuse 39 ist ein Lagervorsprung 46 vorgesehen, beispielsweise an der vom Innenraum des Klemm-Gehäuses 39 abgewandten Rückseite des Klemmkörpers 34. Ein mit dem Spannhebel 45 verbundener Lagerbolzen 48 durchdringt eine Lagerausnehmung 47 am Lagervorsprung 46 und ist in dieser drehbar bzw. schwenkbar gelagert.

Der Lagerbolzen 48 und die Lagerausnehmung 47 bilden Bestandteile eines Schwenklagers 49, mit dem ein Betätigungskörper 50 des Spannhebels 45 relativ zum "ortsfesten" Widerlager-Klemmteil 32 schwenkbar gelagert ist. Der Lagerbolzen 48 ist an einem Lagerabschnitt 51 des Betätigungskörpers 50 angeordnet.

Der Betätigungskörper 50 weist eine plattenartige Gestalt auf.

An dem Lagerabschnitt 51 ist Schwenkschiebelager 52 vorgesehen, mit dem das Stell-Klemmteil 33 an dem Betätigungskörper 50 schwenkbar und zusätzlich verschieblich gelagert ist. Das Schwenkschiebelager 52 umfasst eine Lageraufnahme 53, in der ein Lagerbolzen 54 schwenkbar und zusätzlich verschieblich aufgenommen ist. Der Lagerbolzen 54 wiederum ist mit den freien, vom Klemmkörper 40 entfernten Endbereichen der Zugarme 42 verbunden. Beispielsweise durchdringt er die Zugarme 42 und ist anhand von Sicherungsscheiben 55 gesichert.

Der Lagerbolzen 54 durchdringt also die Zugarme 42 und den Betätigungskörper 50, wobei zwischen den Zugarmen 42 und dem Betätigungskörper 50, konkret dessen Lagerabschnitt 51, Arme 56 eines Zugankerteils 57 angeordnet sind. Das Zugankerteil 57 hat in Draufsicht eine U-förmige Gestalt, d.h. von einer Basis 59 stehen die Arme 56 ab, so dass zwischen den Armen 56 eine Nut oder eine Ausnehmung 58 vorhanden ist. In eine Bohrung 60 an der Basis 59 ist ein Stellglied 61 eingesetzt, beispielsweise eine Stellschraube, deren freies Ende in die Ausnehmung 58 hinein vorsteht. In dieser Ausnehmung 58 ist ferner derjenige Abschnitt des Betätigungskörpers 50 angeordnet, an dem die Lageraufnahme 53 angeordnet ist, wobei sich dieser Abschnitt des Betätigungskörpers 50 an dem Stellglied 61 abstützt.

Wird also das Stellglied 61 quasi in die Basis 59 hinein geschraubt, wird der Betätigungskörper 50 aus der Ausnehmung 58 ein Stück heraus verdrängt oder kann beim Ausschrauben des Stellgliedes 61 in umgekehrter Richtung weiter in die Ausnehmung 58 eindringen. Dadurch ist ein Spielausgleich bewirkbar. Es ist allerdings zu bemerken, dass das Stellglied 61 nicht auf die Lagerachse bzw. den Lagerbolzen 54 direkt einwirkt, sondern auf den Betätigungskörper 50. Somit bleibt also zumindest in der Offenstellung O ein gewisses Schwenkschiebespiel zwischen Lagerbolzen 54 und Lageraufnahme 53 vorhanden, was im ungünstigen Fall dazu führen kann, dass das Stell-Klemmteil 33 nicht wie in Figur 6a, 6b dargestellt seine obere, den Kupplungskörper 14 optimal freigebenden Offenstellung 0 bleibt, sondern bezogen auf die Zeichnung nach links unten rutscht, d.h. dass der Lagerbolzen 54 in Richtung des Stellgliedes 61 verlagert wird.

Dagegen wirkt eine Feder 62, also eine Federanordnung. Die Feder 62 ist in der Lageraufnahme 53 angeordnet, d.h. sie stützt einerseits an der Lageraufnahme 53, andererseits am Lagerbolzen 54 ab. Die Feder 62 ist zudem seitlich geführt, d.h. sie stützt sich weiterhin an den oberen und unteren Innenstirnseiten der Lageraufnahme 53 und/oder vorteilhaft seitlich an den Innenseiten der Arme 56 des Zugankerteils 57 ab. Somit ist die Feder 62 allseitig unverlierbar eingehaust. Es versteht sich, dass statt der Druck-Feder 62 auch eine Zugfeder möglich ist.

Durch das Schwenkschiebelager 52 sowie das Schwenklager 49 ist eine zweiachsige Schwenkbarkeit des Stell-Klemmteiles 33 bezüglich des Widerlager-Klemmteils 32 vorhanden, Insoweit bildet zumindest der die beiden Lagerachsen des Schwenkschiebelagers 52 und des Schwenklagers 49 koppelnde Abschnitt, d.h. der Lagerabschnitt 51, des Betätigungskörpers 50 eine Art Koppelglied. Dies ermöglicht, dass das Stell-Klemmteil 33 weit in die offenstellung o ausschwenkt, so dass das Aufsetzen der Lastenträger-Kupplung 30 auf den Kupplungskörper 14 leicht fällt. Das Aufsetzen wird unter anderem auch dadurch erleichtert, dass sich die Lastenträger-Kupplung 30 mit der dem Kupplungakörper 14 zugewandten Unterseite des Stützkörpers 38 auf der oberen Stirnseite des Kupplungskörpers 14, die bei Norm-Kupplungskugeln abgeflacht ist, aufstützen kann, siehe Figur 6b.

Von dem Lagerabschnitt 51 des Betätigungskörpers 50 steht ein Betätigungsarm 63 ab. Der Betätigungsarm 63 Übergreift das Klemm-Gehäuse 39, wenn die Klemmeinrichtung 31 ihre Klemmstellung K einnimmt (Figur 5) . Am freien Ende des Betätigungsarms 63 ist ein Anschlag 64 vorgesehen, der in der Klemmstellung K am Klemm-Gehäuse 39 anschlägt, beispielsweise am Stützkörper 38. Der Stützkörper 38 ist bei der Ausführungsform gemäß Figur 5 mehrteilig, d.h. er umfasst einen Stirnanschlagkörper 65, der zur Abstützung auf der Kupplungskugel bzw. dem Kupplungskörper 14 dient, sowie einen Stützanschlagkörper 66, beispielsweise in U-förmiger Gestalt, der vom Klemmkörper 34 abragt und als Gegenanschlag für den Anschlag 64 am Betätigungsarm 63 dient.

Nun könnte man sich vorstellen, dass die Klemmeinrichtung 31 bereits durch Betätigen des Betätigungsarms 63 öffenbar und schließbar ist, insbesondere wenn der Betätigungsarm 63 entsprechend länger und damit komfortabel ergreifbar ausgestaltet ist. Beim Spannhebel 45 ist jedoch ein zusätzliches Bauteil vorhanden, nämlich ein Handgriff teil 67, mit dem der Spannhebel 45 zwischen der Klemmstellung K und der Offenstellung O der Klemmeinrichtung 31 verstellbar ist, vorliegend schwenkverstellbar.

Mit dem Handgriffteil 67 ist jedoch nicht nur die Klemmeinrichtung 31 betätigbar, d.h. zu spannen oder zu lösen, sondern auch verriegelbar. Am Handgriffteil 67 sind nämlich Riegel 68 angeordnet, die durch ein verstellen des Handgriffteils 67 relativ zum Betätigungskörper 50 in Eingriff mit dem Klemm-Gehäuse 39 bringbar sind, so dass sie eine Verriegelungsstellung V einnehmen (gestrichelt in Figur 4) oder eine entriegelte Stellung bzw. Lösestellung L (in durchgezogenen Linien in Figur 4). Die Riegel 68 umfassen Haken 69, die mit dem Widerlager-Klemmteil 32 verhakbar sind. In der Verriegelungsstellung V untergreifen die Haken 69 beispielsweise den Stützanschlagkörper 66. Somit kann der Spannhebel 45 nicht mehr vom Widerlager-Klemmteil 32 weggeschwenkt werden, so dass auch nicht das Stell-Klemmteil 33 in Richtung der Offenstellung 0 bewegbar ist.

Vorliegend sind zwei Haken 69 bzw. zwei Riegel 68 vorgesehen, die vom Spannhebel 45 in Richtung des Klemm-Gehäuses 39 abstehen. Die Riegel 68 sind beispielsweise anhand eines Handgriff-Gehäuses 70 des Handgriffteils 67 angeordnet, von dem ein zum Ergreifen und Umgreifen durch einen Bediener vorgesehener Handgriff 71 absteht.

Der Handgriff 71 bildet quasi eine verlängerung des Handgriff-Gehäuses 70. Zumindest oberseitig und/oder seitlich sind der Handgriff 71 und das Handgriff-Gehäuse zweckmäßigerweise konturgleich.

Im Handgriff-Gehäuse 70 ist der Betätigungsarm 63 aufgenommen. Beispielsweise hat das Handgriff-Gehäuse 70 eine im Querschnitt u-förmige Gestalt, wobei von einer Basis oder Grundwand 72 Seitenwände 73 abstehen, z.B. etwa rechtwinkelig. In den Abstand zwischen die Seitenwände 73 greift der Betätigungsarm 63 ein.

Zum Verstellen der Verriegelungseinrichtung, die die Riegel 68 umfasst, zwischen der Lösestellung L und der Verriegelungsstellung V ist das Handgriffteil 67 bezüglich des Betätigungskörpers 50 mit einer Lageranordnung 74 beweglich gelagert. Die Lageranordnung 74 ist vorliegend als ein Schiebelager ausgestaltet, d.h. dass das Handgriffteil 67 bezüglich des Betätigungskörpers zwar verschieblich ist, nämlich entlang einer Schiebeachse 75, jedoch nicht verdrehbar. Die Lageranordnung 74 umfasst also ein Schiebelager 76, das eine Verschieblichkeit entlang der Schiebeachse 75 des Handgriffteils 67 bezüglich des Betätigungskörpers 50 ermöglicht. Wie auch bei anderen als in der Zeichnung dargestellten Ausführungsbeispielen der Erfindung zweckmäßig, verläuft die Schiebeachse 75 quer zu mindestens einer Schwenkachse des Spannhebels 45, beispielsweise der durch das Schwenklager 49 verlaufenden Schwenkachse. Bevorzugt ist der hier gewählte rechtwinkelige Verlauf, wobei auch spitzwinkelige oder stumpfwinkelige Verläufe von Schiebe- und Schwenkachse möglich sind.

Das Schiebelager 76 ist an dem einen Koppelabschnitt des Betätigungskörpers 50 bildenden Betätigungsarm 63 angeordnet.

Von einander entgegengesetzten Seitenflächen 77 des Betätigungskörpers 50 abstehende Führungsvorsprünge 78 greifen in Führungsaufnahmen 79 an den ihnen zugewandten Seitenwänden 73 des Handgriff-Gehäuses 70 ein. Die Führungsaufnahmen 79 sind als Langlöcher ausgestaltet, so dass die Führungsvorsprünge 78 in ihnen entlang der Schiebeachse 75 bzw. parallel dazu verschieblich gelagert sind. Die Führungsvorsprünge 78 bzw. die Führungsaufnahme 79 haben bezogen auf die Schiebeachse 75 einen Längsabstand, so dass das Handgriff teil 67 am Betätigungskörper 50 unverdrehbar, jedoch verschieblich geführt ist.

Es versteht sich, dass es nicht notwendig ist, jeweils ein paar Führungsvorsprünge 78 an einander entgegengesetzten Seitenflächen 77 vorzusehen. Es ist auch möglich, dass beispielsweise eine der Seitenflächen 77 ohne Führungsvorsprung oder nur mit einem Führungsvorsprung versehen ist. Beispielsweise kann eine der Seitenflächen 77 entlang der Innenseite einer Seitenwand 73 gleitverschieblich gelagert sein, während an der anderen Seite die beispielsweise in Figur 3 ersichtlich zwei Führungsvorsprünge 78 in korrespondierende Führungsaufnahmen 79 eingreifen. Weiterhin ist es möglich, anstelle des Schiebelagers 76 andersartige Schiebelager vorzusehen, beispielsweise in dem ein stabförmiger Vorsprung in eine diesen längsverschieblich aufnehmende Aufnahme eingreift, z.B. eine entsprechend in Richtung der Schiebeachse verlaufende Längsbohrung.

Die Riegel 68 sind beispielsweise einstückig mit den Seitenwänden 73.

Die Führungsvorsprünge 78 und/oder das Schwenklager 49 können auch Gleitbuchsen, Rollenlager, Rollhülsen etc. aufweisen, was die Reibung verringert.

Die Bedienung verläuft also wie folgt: Ein Bediener ergreift den Handgriff 71 und zieht diesen entlang der Schiebeachse 75 aus der Verriegelungsstellung V in Richtung der Entriegelungsstellung oder Lösestellung L. Dies geschieht beispielsweise entgegen der Kraft einer Feder 80, die das Handgriffteil 67 in Richtung der Verriegelungsstellung V belastet. Beispielsweise stützt sich die Feder 80 einerseits am Betätigungskörper 50 ab, andererseits am Handgriffteil 67. In der eingezeichneten Stellung handelt es sich bei der Feder 80 um eine Druckfeder, wobei an der entgegengesetzten Seite eine Zugfeder zweckmäßig ist.

Sodann schwenkt der Bediener den entriegelten Spannhebel 45 vom widerlager-Klemmteil 32 weg, beispielsweise nach oben, so dass die Klemmeinrichtung 31 in die Offenstellung 0 gelangt. Das Verschließen bzw. Klemmen verläuft sinngemäß umgekehrt, d.h. zunächst wird der Spannhebel 45 zum widerlager-Klemmteil 32, mithin also dem Klemm-Gehäuse 39 hin verschwenkt und dann abschließend zum Verriegeln, d.h. zum verstellen in die Verriegelungsstellung V entlang der Schiebeachse 75, ggf. mit Unterstützung der Feder 80, verstellt.

Die korrekte Verriegelung, die nur bei richtigem Verspannen bzw. Klemmen des Kupplungskörpers 14 möglich ist, wird allein schon dadurch optisch sichtbar, dass die Riegel 68 in Eingriff mit dem Widerlager-Klemmteil 32 sind. Eine zweckmäßige Maßnahme sieht vor, dass zur optischen Signalisierung zusätzlich ein Indexteil 81 und eine Skala 82, z.B. eine Farbmarkierung mit unterschiedlich eingefärbten Zonen (z.B. grün = verriegelt, rot = entriegelt), wobei das Indexteil 81 und die Skala 82 relativ zueinander verschieblich sind entsprechend einer Stellbewegung des Handgriffteils 67 relativ zum Betätigungskörper 50. Beispielsweise ist das Indexteil 81 an einem oder beiden Führungsvorsprüngen 78 angeordnet. Denkbar ist beispielsweise, dass das Indexteil 81 wie in Figur 2 angedeutet eine Art Bügel bildet, der sich über die Grundwand 72 hinweg vom einen Führungsvorsprung 78 zum gegenüberliegenden Führungsvorsprung 78 erstreckt. Die Skala 82 ist beispielsweise an der Grundwand 72 angeordnet und wird vom Indexteil 81 überstrichen oder überfahren, wenn das Handgriffteil 67 entriegelt oder verriegelt wird.

Zweckmäßigerweise ist ein Schloss 83 zum Verschließen der Lastenträger-Kupplung 30 in der Verriegelungsstellung V vorgesehen. Das Schloss 83 ist beispielsweise am Handgriffteil 67 angeordnet und blockiert ein Verstellen desselben in Richtung der Lösestellung L, wenn es verschlossen ist. Beispielsweise nimmt dann ein Schließvorsprung 84 des Schlosses 83 die in Figur 5 dargestellte Schließstellung ein, in der der Schließvorsprung 84 am Betätigungskörper 50 anschlägt, z.B. an einem nach oben vor den Lagerabschnitt 51 vorstehenden Bereich des Betätigungskörpers 50. Wenn das Schloss 83 geöffnet ist, ist der Schließvorsprung 84 beispielsweise seitlich vom Betätigungskörper 50 weg verstellt, so dass er nicht wie in Figur 5 dargestellt an dessen Stirnseite anschlägt, sondern an dessen Querseite vorbeibeweglich ist (gestrichelte Linien) . Zum Öffnen und Schließen des Schlosses 83 sind Schlüssel 85 vorgesehen, vorzugsweise gleichschließend mit Schlössern an den Klammerhaltern 25.

## Patentansprüche

1. Lastenträger-Kupplung für einen Lastenträger (10), zum lösbaren Befestigen an einem Kupplungskörper (14), insbesondere einer Kupplungskugel, einer Anhängekupplung (13) eines Kraftfahrzeugs (12), mit einer Klemmeinrichtung (31), die Klemmteile (32, 33) umfasst, von denen mindestens eines ein Stell-Klemmteil (33) bildet, das anhand eines Betätigungskörpers (50) zwischen einer zum Einbringen des Kupplungskörpers (14) zwischen die Klemmteile (32, 33) vorgesehenen Offenstellung (0) und einer den Kupplungskörper (14) klemmenden Klemmstellung (K) bewegbar ist, mit einem Spannhebel (45) zum Spannen des Stell-Klemmteils (33) in die Klemmstellung (K), und mit mindestens einem Riegel (68), der in einer Verriegelungsstellung (V) ein Verstellen der Klemmeinrichtung (31) in die Offenstellung (0) blockiert und in einer Lösestellung (L) ein Verstellen der Klemmeinrichtung (31) in die Offenstellung (O) freigibt, wobei der mindestens eine Riegel (68) an einem auf den Betätigungskörper (50) wirkenden, zum Verstellen des Spannhebels (45) zwischen der Klemmstellung (K) und der Offenstellung (O) der Klemmeinrichtung (31) vorgesehenen Handgriffteil (67) des Spannhebels (45) angeordnet ist, **dadurch gekennzeichnet, dass** das Handgriffteil (67) an dem Betätigungskörper (50) mittels einer Lageranordnung (74) beweglich gelagert ist, so dass der Riegel (68) durch eine Verstellung des Handgriffteils (67) relativ zu dem Betätigungskörper (50) zwischen der Verriegelungsstellung (V) und der Lösestellung (L) verstellbar ist, wobei die Lageranordnung (74) das Handgriffteil (67) und den Betätigungskörper (50) bewegungsfest bezüglich einer Spannbewegung koppelt, in der das Handgriffteil (67) auf den Betätigungskörper (50) beim Spannen der Klemmeinrichtung (31) wirkt.

2. Lastenträger-Kupplung nach Anspruch 1, **dadurch gekennzeichnet, dass** die Lageranordnung (74) ein insbesondere lineares Schiebelager (76) und/oder ein Schwenklager bildet oder umfasst.

3. Lastenträger-Kupplung nach Anspruch 1 oder 2, **dadurch gekennzeichnet, dass** mindestens zwei insbesondere als Schiebelager (76) ausgestaltete Lager in einem Abstand bezüglich einer Längserstreckungsrichtung der Lageranordnung (74) und/oder des Handgriff teils (67) und/oder eines zum Koppeln mit dem Handgriffteil (67) vorgesehenen Koppelabschnitts des Betätigungskörpers (50) nebeneinander angeordnet sind.

4. Lastenträger-Kupplung nach Anspruch 1, 2 oder 3, **dadurch gekennzeichnet, dass** das Schiebelager (76) ein Paar an einander gegenüberliegenden Seitenflächen des Handgriffteils (67) oder des Betätigungskörpers (50) angeordnete Führungsaufnahmea (79) oder Führungsvorsprünge (78) aufweist, mit denen am anderen Bauteil, dem Betätigungskörper (50) oder dem Handgriffteil (67), angeordnete Führungsvorsprünge (78) oder Führungsaufnahmen (79) im Eingriff sind.

5. Lastenträger-Kupplung nach einem der vorhergehenden Ansprüche, **dadurch gekennzeichnet, dass** der Spannhebel (45) mindestens ein Indexteil (31) zur Anzeige der Klemmstellung (K) und/oder der Verriegelungsstellung (V) aufweist.

6. Lastenträger-Kupplung nach einem der vorhergehenden Ansprüche, **dadurch gekennzeichnet, dass** der Betätigungskörper (50) mittels eines Schwenklagers (49) schwenkbeweglich relativ zu einem der Klemmteile (32) oder einem Widerlager gelagert ist, gegenüber dem das mindestens eine Stell-Klemmteil (33) spannbar ist.

7. Lastenträger-Kupplung nach einem der vorhergehenden Ansprüche, **dadurch gekennzeichnet, dass** das Handgriffteil (67) einen Arm umfasst und/oder dass sie ein Schloss (83) aufweist, mit dem der Spannhebel (45), insbesondere das Handgriffteil (67), in der Verriegelungsstellung (V) und/oder der Offenstellung (0) verschließbar ist.

8. Lastenträger-Kupplung nach einem der vorhergehenden Ansprüche, **dadurch gekennzeichnet, dass** der mindestens eine Riegel (68) einen vor einen Griffabschnitt des Handgriffteils (67) vorstehende Klaue oder einen vorstehenden Haken (69) umfasst und/oder dass der Riegel (68) durch eine Federanordnung (80) in die verriegelungsstellung (V) belastet ist.

9. Lastenträger-Kupplung nach einem der vorhergehenden Ansprüche, **dadurch gekennzeichnet, dass** der Spannhebel (45) in der Klemmstellung (K) der Klemmeinrichtung (31) ein Widerlager und/oder ein mindestens eines der Klemmteile (32) umfassendes, zur Aufnahme des Kupplungselements vorgesehenes Klemm-Gehäuse (39) und/oder ein durch den Spannhebel (45) nicht betätigbares, bezüglich einem Gestell (16) des Lastenträgers (10) ortsfestes Klemmteil (32) übergreift.

10. Lastenträger-Kupplung nach einem der vorhergehenden Ansprüche, **dadurch gekennzeichnet, dass** das Schwenklager und der mindestens eine Riegel (68) an einander entgegengesetzten Seiten des Widerlagers oder des Klemm-Gehäuses (39) oder des ortsfesten Klemmteils (32) angeordnet sind.

11. Lastenträger-Kupplung nach einem der vorhergehenden Ansprüche, **dadurch gekennzeichnet, dass** der Spannhebel (45) in der verriegelungsstellung (V) des mindestens einen Riegels (68) einen Anschlag oder ein Widerlager für das Stell-Klemmteil (33) umfasst oder bildet, das das Stell-Klemmteil (33) gegen ein Verstellen aus die Klemmstellung (K) sichert.

12. Lastenträger-Kupplung nach einem der vorhergehenden Ansprüche, **dadurch gekennzeichnet, dass** das Handgriffteil (67) ein Handgriff-Gehäuse (70) bildet oder aufweist, in dem ein Lagerabschnitt des Betätigungskörpers (50) aufgenommen ist oder dass der Betätigungskörper (50) einen Gehäuseabschnitt aufweist, in dem ein Lagerabschnitt des Handgriffteils (67) aufgenommen ist.

13. Lastenträger-Kupplung nach einem der vorhergehenden Ansprüche, **dadurch gekennzeichnet, dass** das Stell-Klemmteil (33) durch eine Federanordnung (62) in die Offenstellung (O) belastet ist.

14. Lastenträger-Kupplung nach einem der vorhergehenden Ansprüche, **dadurch gekennzeichnet, dass** das Stell-Klemmteil (33) beweglich, insbesondere schwenkbeweglich und/oder schiebebeweglich, an dem Betätigungskörper (50) gelagert ist oder mit dem Betätigungskörper (50) einstückig ist.

15. Lastenträger (10) mit einer Lastenträger-Kupplung (30) nach einem der vorhergehenden Ansprüche.

## Claims

1. Load carrier coupling for a load carrier (10), for the releasable fastening to a coupling body (14), in particular a coupling ball, of a trailer coupling (13) of a motor vehicle (12), with a gripping device (31) which includes gripping parts (32, 33), of which at least one forms an actuating gripping part (33) which is movable with the aid of an actuating body (50) between an open position (O) for inserting the coupling body (14) between the gripping parts (32, 33), and a gripping position (K) gripping the coupling body (14), with a clamping lever (45) for clamping the actuating gripping part (33) in the gripping position (K), and with at least one bolt (68) which, in a locking position (V), blocks any shifting of the gripping device (31) into the open position (O), and in a release position (L) allows shifting of the gripping device (31) into the open position (O), wherein the bolt or bolts (68) is or are located on a handgrip part (67) of the clamping lever (45) acting on the actuating body (50) and provided to shift the clamping lever (45) between the gripping position (K) and the open position (O) of the gripping device (31), **characterised in that** the handgrip part (67) is mounted movably on the actuating body (50) by means of a bearing assembly (74) so that the bolt (68) is adjustable, by shifting the handgrip part (67) relative to the actuating body (50), between the locking position (V) and the release position (L), wherein the bearing assembly (74) connects the handgrip part (67) and the actuating body (50) immovably in respect of a clamping movement in which the handgrip part (67) acts on the actuating body (50) during clamping of the gripping device (31).

2. Load carrier coupling according to claim 1, **characterised in that** the bearing assembly (74) forms or includes a sliding bearing (76), in particular linear, and/or a swivel bearing.

3. Load carrier coupling according to claim 1 or 2, **characterised in that** at least two bearings, in particular in the form of sliding bearings (76), are arranged next to one another at an interval in respect of a direction of longitudinal extent of the bearing
assembly (74) and/or of the handgrip part (67) and/or of a coupling section of the actuating body (50) provided for connecting to the handgrip part (67).

4. Load carrier coupling according to claim 1, 2 or 3, **characterised in that** the sliding bearing (76) has a pair of guide sockets (79) or guide projections (78) arranged on opposite side faces of the handgrip part (67) or the actuating body (50), with which guide projections (78) or guide sockets (79) provided on the other component, the actuating body (50) or the handgrip part (67), are in engagement.

5. Load carrier coupling according to any of the preceding claims, **characterised in that** the clamping lever (45) has at least one indexing part (81) to indicate the gripping position (K) and/or the locking position (V).

6. Load carrier coupling according to any of the preceding claims, **characterised in that** the actuating body (50) is mounted with the ability to swivel, by means of a swivel bearing (49), relative to one of the gripping parts (32) or a thrust bearing.

7. Load carrier coupling according to any of the preceding claims, **characterised in that** the handgrip part (67) comprises an arm and/or that it has a lock (83), which may be used to lock the clamping lever (45), in particular the handgrip part (67), in the locking position (V) and/or the open position (O).

8. Load carrier coupling according to any of the preceding claims, **characterised in that** the bolt or bolts (68) include(s) a claw extending in front of a handle section of the handgrip part (67), or a protruding hook (69), and/or that the bolt (68) is biased by a spring assembly (80) towards the locking position (V).

9. Load carrier coupling according to any of the preceding claims, **characterised in that** the clamping lever (45), in the gripping position (K) of the gripping device (31), reaches over a thrust bearing, and/or a gripping housing (39) including at least one of the gripping parts (32) and which is provided to accommodate the coupling element, and/or a gripping part (32) which is not actuable by the clamping lever (45) and is immovable relative to a framework (16) of the load carrier (10).

10. Load carrier coupling according to any of the preceding claims, **characterised in that** the swivel bearing and the bolt or bolts (68) are fitted on opposite sides of the thrust bearing or the gripping housing (39) or the immovable gripping part (32).

11. Load carrier coupling according to any of the preceding claims, **characterised in that** the clamping lever (45) in the locking position (V) of the bolt or bolts (68) includes or forms a stop or a thrust bearing for the actuating gripping part (33), which prevents the actuating gripping part (33) from shifting out of the gripping position (K).

12. Load carrier coupling according to any of the preceding claims, **characterised in that** the handgrip part (67) forms or has a handgrip housing (70) in which a bearing section of the actuating body (50) is accommodated or that the actuating body (50) has a housing section in which a bearing section of the handgrip part (67) is accommodated.

13. Load carrier coupling according to any of the preceding claims, **characterised in that** the actuating gripping part (33) is biased by a spring assembly (62) into the open position (O).

14. Load carrier coupling according to any of the preceding claims, **characterised in that** the actuating gripping part (33) is mounted on the actuating body (50) so as to be movable, in particular with the ability to swivel or slide, or is integral with the actuating body (50).

15. Load carrier (10) with a load carrier coupling (30) according to any of the preceding claims.

## Revendications

1. Couplage pour un support de charge (10), destiné à la fixation détachable à un corps d'attelage (14), en particulier une boule d'attelage, d'un attelage (13) d'un véhicule automobile (12), avec un dispositif de serrage (31) qui comporte des parties de serrage (32, 33), dont au moins l'une forme une partie de serrage et de réglage (33) qui est mobile à l'aide d'un corps d'actionnement (50) entre une position ouverte (O) prévue pour l'introduction du corps d'attelage (14) entre les parties de serrage (32, 33) et une position de serrage (K) serrant le corps d'attelage (14), avec un levier de serrage (45) pour le serrage de la partie de serrage et de réglage (33) dans la position de serrage (K), et avec au moins un verrou (68) qui bloque, dans une position de verrouillage (V), un déplacement du dispositif de serrage (31) dans la position ouverte (O) et libère, dans une position de détachement (L), un déplacement du dispositif de serrage (31) dans la position ouverte (O), l'au moins un verrou (68) étant disposé sur une partie de poignée (67) du levier de serrage (45) agissant sur le corps d'actionnement (50), prévue pour le réglage du levier de serrage (45) entre la position de serrage (K) et la position ouverte (O) du dispositif de serrage (31), **caractérisé en ce que** la partie de poignée (67) est logée de manière mobile sur le corps d'actionnement (50) à l'aide d'un ensemble de palier (74) de sorte que le verrou (68) puisse être déplacé par un déplacement de la partie de poignée (67) par rapport au corps d'actionnement (50) entre la position de verrouillage (V) et la position de détachement (L), l'ensemble de palier (74) couplant la partie de poignée (67) et le corps d'actionnement (50) de manière immobile par rapport à un mouvement de serrage, dans lequel la partie de poignée (67) agit sur le corps d'actionnement (50) lors du serrage du dispositif de serrage (31).

2. Couplage pour support de charge selon la revendication 1, **caractérisé en ce que** l'ensemble de palier (74) forme ou comporte un palier de coulissement (76) notamment linéaire et/ou un palier de pivotement.

3. Couplage pour support de charge selon la revendication 1 ou 2, **caractérisé en ce qu'**au moins deux paliers configurés notamment comme des paliers de coulissement (76) sont disposés l'un à côté de l'autre à une distance par rapport à un sens d'étendue longitudinal de l'ensemble de palier (74) et/ou de la partie de poignée (67) et/ou d'une section de couplage prévue pour le couplage avec la partie de poignée (67) du corps d'actionnement (50).

4. Couplage pour support de charge selon la revendication 1, 2 ou 3, **caractérisé en ce que** le palier de coulissement (76) présente une paire de logements de guidage (79) ou saillies de guidage (78) disposées sur des surfaces latérales opposées de la partie de poignée (67) ou du corps d'actionnement (50), avec lesquelles des saillies de guidage (78) ou logements de guidage (79) disposés sur l'autre composant, le corps d'actionnement (50) ou la partie de poignée (67) sont en engagement.

5. Couplage pour support de charge selon l'une quelconque des revendications précédentes, **caractérisé en ce que** le levier de serrage (45) présente au moins une partie de repérage (31) pour l'affichage de la position de serrage (K) et/ou de la position de verrouillage (V).

6. Couplage pour support de charge selon l'une quelconque des revendications précédentes, **caractérisé en ce que** le corps d'actionnement (50) est logé à l'aide d'un palier de pivotement (49) de manière mobile en pivotement par rapport à l'une des parties de serrage (32) ou un contre-palier, par rapport auquel l'au moins une partie de serrage et de réglage (33) peut être serrée.

7. Couplage pour support de charge selon l'une quelconque des revendications précédentes, **caractérisé en ce que** la partie de poignée (67) comporte un bras et/ou **en ce qu'**elle présente une serrure (83), avec laquelle le levier de serrage (45), en particulier la partie de poignée (67) peut être fermée dans la position de verrouillage (V) et/ou la position ouverte (O).

8. Couplage pour support de charge selon l'une quelconque des revendications précédentes, **caractérisé en ce que** l'au moins un verrou (68) comporte une pince dépassant d'une section de préhension de la partie de poignée (67) ou un crochet en saillie (69) et/ou **en ce que** le verrou (68) est sollicité par un ensemble de ressort (80) dans la position de verrouillage (V).

9. Couplage pour support de charge selon l'une quelconque des revendications précédentes, **caractérisé en ce que** le levier de serrage (45) dans la position de serrage (K) du dispositif de serrage (31) recouvre un contre-palier et/ou un boîtier de serrage (39) comportant au moins l'une des parties de serrage (32), prévu pour le logement de l'élément de couplage et/ou une partie de serrage (32) non actionnable par le levier de serrage (45), fixe par rapport à un bâti (16) du support de charge (10).

10. Couplage pour support de charge selon l'une quelconque des revendications précédentes, **caractérisé en ce que** le palier de pivotement et l'au moins un verrou (68) sont disposés sur des côtés opposés du contre-palier ou du boîtier de serrage (39) ou de la partie de serrage (32) fixe.

11. Couplage pour support de charge selon l'une quelconque des revendications précédentes, **caractérisé en ce que** le levier de serrage (45) comporte ou forme dans la position de verrouillage (V) de l'au moins un verrou (68) une butée ou un contre-palier pour l'élément de serrage et de réglage (33) qui bloque la partie de serrage et de réglage (33) contre un déplacement hors de la position de serrage (K).

12. Couplage pour support de charge selon l'une quelconque des revendications précédentes, **caractérisé en ce que** la partie de poignée (67) forme ou présente un boîtier de poignée (70), dans lequel une section de palier du corps d'actionnement (50) est reçue ou **en ce que** le corps d'actionnement (50) présente une section de boîtier, dans laquelle une section de palier de la partie de poignée (67) est reçue.

13. Couplage pour support de charge selon l'une quelconque des revendications précédentes, **caractérisé en ce que** la partie de serrage et de réglage (33) est sollicitée par un ensemble de ressort (62) dans la position ouverte (O).

14. Couplage pour support de charge selon l'une quelconque des revendications précédentes, **caractérisé en ce que** la partie de serrage et de réglage (33) est logée de manière mobile, notamment mobile en pivotement et/ou coulissement, sur le corps d'actionnement (50) ou est d'un seul tenant avec le corps d'actionnement (50).

15. Support de charge (10) avec un couplage de support de charge (30) selon l'une quelconque des revendications précédentes.
